Europäisches Patentamt

European Patent Office (11) Numéro de publication: **0 230 165**
**B1**

Office européen des brevets

(12) **FASCICULE DE BREVET EUROPEEN**

(45) Date de publication du fascicule du brevet: (51) Int. Cl.⁴: **B25J 9/04**, B25J 17/02,
19.07.89 B24C 3/00

(21) Numéro de dépôt: 86402599.4

(22) Date de dépôt: 21.11.86

(54) Système automatique de grenaillage destiné à engendrer des précontraintes superficielles.

(30) Priorité: 29.11.85 FR 8517705

(73) Titulaire: AEROSPATIALE SOCIETE NATIONALE
INDUSTRIELLE Société Anonyme dite:, 37, Boulevard
de Montmorency, F-75016 Paris(FR)

(43) Date de publication de la demande:
29.07.87 Bulletin 87/31

(72) Inventeur: Bon, Gérard, Moulin de la Bénetière,
F-44860 Pont St. Martin(FR)

(45) Mention de la délivrance du brevet:
19.07.89 Bulletin 89/29

(74) Mandataire: Bonnetat, Christian et al, Cabinet PROPI
Conseils 23 rue de Léningrad, F-75008 Paris(FR)

(84) Etats contractants désignés:
DE GB IT

(56) Documents cités:
EP-A- 0 094 850
EP-A- 0 140 505
DE-A- 3 439 096
DE-A- 3 526 958

AUTOMATION,
vol. 17, no. 12, décembre 1970, pages 47-50, Cleveland,
US; T. LINDBOM et al.: "Clamping devices for industrial
robots"

**Description**

La présente invention concerne un système automatique de grenaillage destiné à engendrer des précontraintes de compression superficielles sur des pièces, notamment de grandes dimensions, soumises localement à des efforts élévés pendant leur utilisation. Quoique non exclusivement, il est particulièrement approprié au traitement des éléments structuraux d'un aéronef.

On sait que l'objet d'une opération de grenaillage créant des précontraintes de compression superficielles est d'améliorer la résistance à la fatigue, à la corrosion et aux frottements, c'est-à-dire d'accroître la résistance générale, des parties d'une pièce soumises à un tel grenaillage. Aussi, par exemple, les parties d'une pièce structurale d'aéronef soumises à des efforts importants pendant l'utilisation de cet aéronef, sont-elles soumises à ce grenaillage, désigné ci-après par grenaillage de précontraintes.

De façon connue, un tel grenaillage de précontraintes met en oeuvre des buses projetant, à grande vitesse, des projectiles constitués le plus souvent de billes d'acier, de verre, de céramique ou analogue. La projection s'effectue généralement sur des zones localisées d'une pièce (celles qui sont le plus sensibles aux efforts dont les effets nuisables doivent être contrecarrés) suivant un processus respectant très précisément certains critères, conformément à des normes.

Jusqu'à présent, le grenaillage de précontraintes est effectué manuellement par un opérateur, dans une enceinte étanche, ledit opérateur déplaçant à la main une telle buse de grenaillage en regard desdites zones localisées des pièces à renforcer.

Un tel processus manuel présente un sérieux inconvénient. En effet, ledit opérateur doit être enfermé dans l'enceinte étanche de grenaillage et ses conditions de travail sont particulièrement pénibles, bien qu'il soit physiquement protégé par un scaphandre ventilé.

En conséquence, l'un des objets de la présente invention est de réaliser une installation automatique de grenaillage de précontraintes remédiant à cet inconvénient et permettant à l'opérateur d'être placé, non plus à l'interieur de l'enceinte de grenaillage, mais à l'extérieur de celle-ci, à l'air libre, la fonction de cet opérateur n'étant plus de déplacer manuellement la buse de projection, mais de piloter ladite installation, (voir EP-A 094 850).

L'une des difficultés à résoudre lorsque l'on désire réaliser une installation automatique de grenaillage de précontraintes provient de ce que les zones localisées de grenaillage se situent généralement sur deux faces opposées de la pièce à traiter, le plus souvent en bordure de découpes ou d'anfractuosités. Aussi, si l'opération de grenaillage de précontraintes est relativement aisée à réaliser manuellement, elle est pratiquement impossible à effectuer à partir d'un seul bras de robot, qui doit en effet contourner l'ensemble de la pièce pour présenter le jet de projectiles de grenaillage aux endroits souhaités. De plus, cette présentation est encore compliquée du fait que l'angle d'incidence du jet de projectiles de grenaillage doit présenter une valeur bien déterminée, éventuellement variable d'une zone de grenaillage à une autre ou à l'intérieur d'une telle zone, afin que les précontraintes engendrées aient l'ampleur souhaitée. Aussi est-ce pour cela qu'il n'existe pas actuellement une telle installation automatique de grenaillage sur le marché.

Pour résoudre ces difficultés, on pourrait penser à prévoir deux robots, un de chaque côté de la pièce à grenailler. Mais alors, l'installation est fortement compliquée et l'égalité des caractéristiques permanentes des deux jets de projectiles de grenaillage devient aléatoire.

Aussi, l'objet de la présente invention est plus précisément un système automatique de grenaillage de précontraintes comportant un robot programmable unique., dont le bras est susceptible d'adresser le jet de projectiles à n'importe quel endroit de la face avant et de la face arrière d'une pièce à traiter, aussi bien que sur les bords d'une découpe de cette pièce, et ceci en respectant un angle d'incidence approprié et en assurant la constance des résultats obtenus d'une pièce à une autre (ce qui ne peut être assuré par le processus manuel). Il en résulte donc une amélioration des performances du grenaillage et une possibilité de gain de poids pour lesdites pièces, puisque les précontraintes engendrées sont mieux définies.

A cette fin selon l'invention, le système automatique destiné à engendrer par grenaillage des précontraintes de compression superficielles sur une pièce à traiter et comportant des moyens robotisés susceptibles de déplacer, par rapport à ladite pièce, au moins une buse émettant un jet de projectiles de grenaillage est remarquable en ce qu'il comporte un robot unique du type communiquant à son poignant cinq degrés de liberté, en ce que ladite buse est reliée audit poignet par l'intermédiaire d'un bras monté sur ledit poignet de façon à tourner autour de deux axes orthogonaux, dont le premier a sensiblement la même direction générale que ledit bras, et en ce que ladite buse est articulée à l'extrémité dudit bras opposée au poignet de façon à pouvoir occuper l'une ou l'autre de deux positions par basculement autour d'un troisième axe parallèle au second axe dudit poignet.

En effet, la demanderesse a trouvé par expérience qu'un tel système permettait au jet de projectiles d'atteindre toute zone désirée d'une pièce à traiter, même de forme compliquée, en respectant les limites d'incidence possibles pour tous les points desdites zones. On remarquera que le système selon l'invention est particulièrement avantageux puisqu'il nécessite seulement le contrôle de cinq degrés de liberté et le choix de la position de la buse entre deux positions possibles.

De préférence, ledit bras présente la forme au moins approximative d'un L, dont la première branche est reliée audit poignet et dont la seconde branche porte ladite buse à son extrémité libre et ladite seconde branche du bras est orthogonale audit premier axe.

Afin de rapprocher la buse dudit premier axe du poignet, ladite première branche est inclinée par rapport audit premier axe dudit poignet, de façon à s'éloigner dudit premier axe en direction de ladite seconde branche.

Avantageusement, les cinq degrés de liberté dudit robot et le choix de l'une ou l'autre des deux positions de ladite buse par rapport audit bras sont commandés par un calculateur.

La présente invention concerne de plus une installation automatique destinée à engendrer par grenaillage des précontraintes de compression superficielles sur une pièce à traiter et comportant une enceinte étanche dans laquelle est disposée ladite pièce, cette installation comportant un système automatique tel que spécifié ci-dessus et disposé au moins partiellement dans ladite enceinte.

Les figures du dessin annexé feront bien comprendre comment l'invention peut être réalisée. Sur ces figures, des références identiques désignent des éléments identiques.

La figure 1 est une vue schématique d'une installation de grenaillage de précontraintes.

La figure 2 montre un robot connu pour l'installation de la figure 1.

La figure 3 montre le porte-buse selon l'invention pour le robot de la figure 2.

Les figures 4 à 10 illustrent schématiquement le grenaillage de précontraintes d'une ferrure de forme complexe par le système selon l'invention.

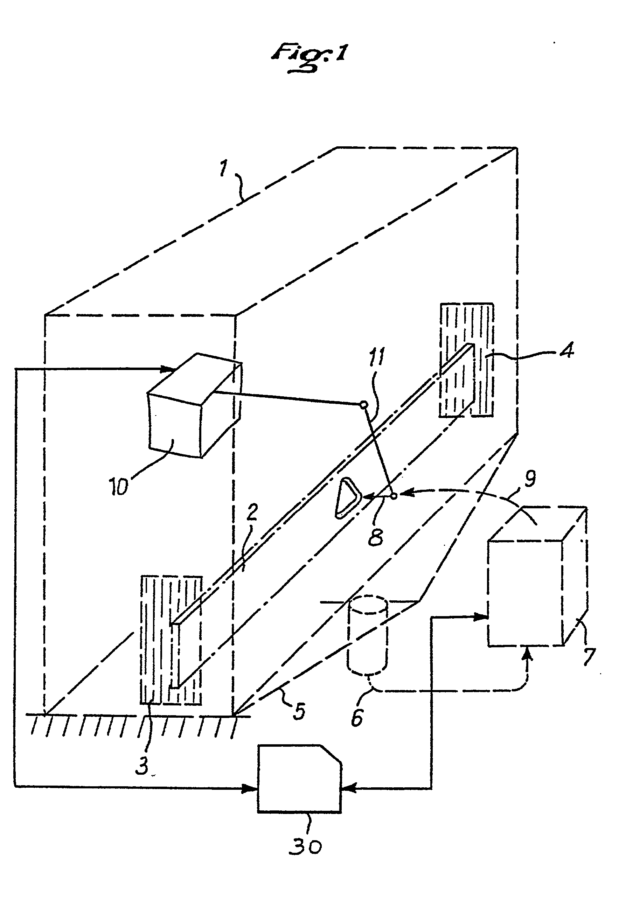

L'installation automatique de grenaillage de précontraintes selon l'invention, montrée schématiquement par la figure 1, comporte une enceinte 1 de dimensions suffisantes pour contenir une pièce 2 à grenailler. L'enceinte 1 est pourvue d'un sas d'entrée 3 et d'un sas de sortie 4 pour la pièce 2. Des moyens de transport (non représentés) sont prévus pour amener ladite pièce 2 dans l'enceinte 1 et l'en sortir. Cette pièce 2 est représentée sur la figure 1 comme étant un longeron d'aéronef.

L'enceinte 1 doit être prévue étanche en ce qui concerne les projectiles de grenaillage, afin que ceux-ci ne puissent se répandre à l'extérieur pendant le grenaillage. Le fond 5 de l'enceinte 1 est conformée en trémie pour recueillir lesdits projectiles de grenaillage et les diriger vers un bac de récupération 6, en liaison avec un dispositif de retraitement et de recyclage 7 alimentant une buse de projection 8 en projectiles, par un conduit 9. Ce dispositif 7 est apte à contrôler les caractéristiques du jet des projectiles.

Le dispositif 7 et la buse 8 peuvent être de tout type connu et ne sont que représentés extrêmement schématiquement sur la figure 1.

Un robot 10, disposé au moins partiellement à l'intérieur de l'enceinte 1, est chargé de mouvoir la buse 8 par rapport à la pièce 2, afin d'obtenir le grenaillage de zones désirées de celle-ci. Pour cela, la buse 8 est montée au bout d'un bras 11 animé par ledit robot 10.

Un calculateur 30 est chargé de commander tous les paramètres et séquences de grenaillage par contrôle du dispositif 7 d'alimentation en projectiles de la buse 8 et du robot 10.

Ainsi, de façon séquentielle, le calculateur 30 procède au grenaillage des parties de la pièce 2 qui doivent être traitées. De plus, à tout moment, ledit calculateur contrôle les caractéristiques du jet de projectiles de grenaillage émis par la buse 8.

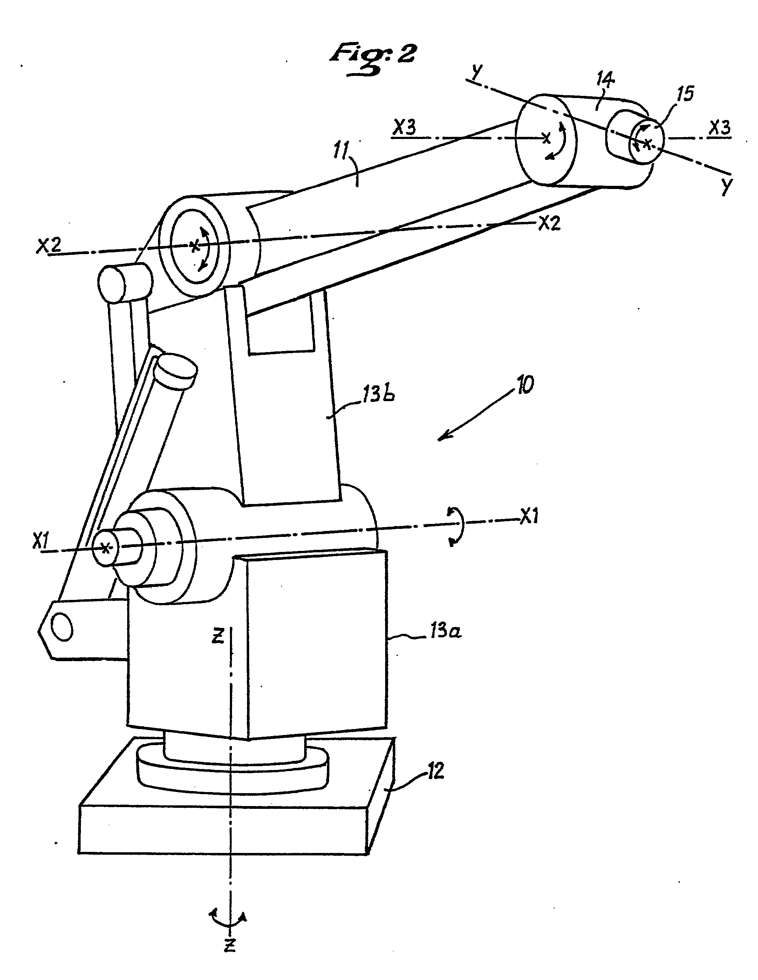

Sur la figure 2, on a représenté un mode de réalisation connu pour le robot 10. Un tel robot 10 comporte une embase fixe 12 destinée à reposer sur le sol et un équipage mobile 13a, 13b susceptible de tourner autour d'un axe vertical Z-Z. L'équipage mobile est composé de deux parties 13a et 13b, articulées entre elles de façon que la partie supérieure 13b puisse tourner autour d'un premier axe horizontal X1-X1, par rapport à la partie inférieure 13a.

A l'extrémité supérieure de la partie 13b est monté le bras 11 du robot, articulé autour d'un second axe horizontal X2-X2. L'extrémité libre du bras 11 se termine par un poignet 14, mobile autour de deux axes orthogonaux, dont l'un X3-X3 est horizontal et l'autre Y-Y peut pivoter autour de l'axe X3-X3. Les axes horizontaux X1-X1, X2-X2 et X3-X3 sont parallèles entre eux.

Le poignet 14 se termine par un dispositif de raccord 15 pour un porte-buse.

On voit ainsi que le robot 10 communique cinq degrés à un tel porte-buse, puisqu'il comporte cinq axes de rotation.

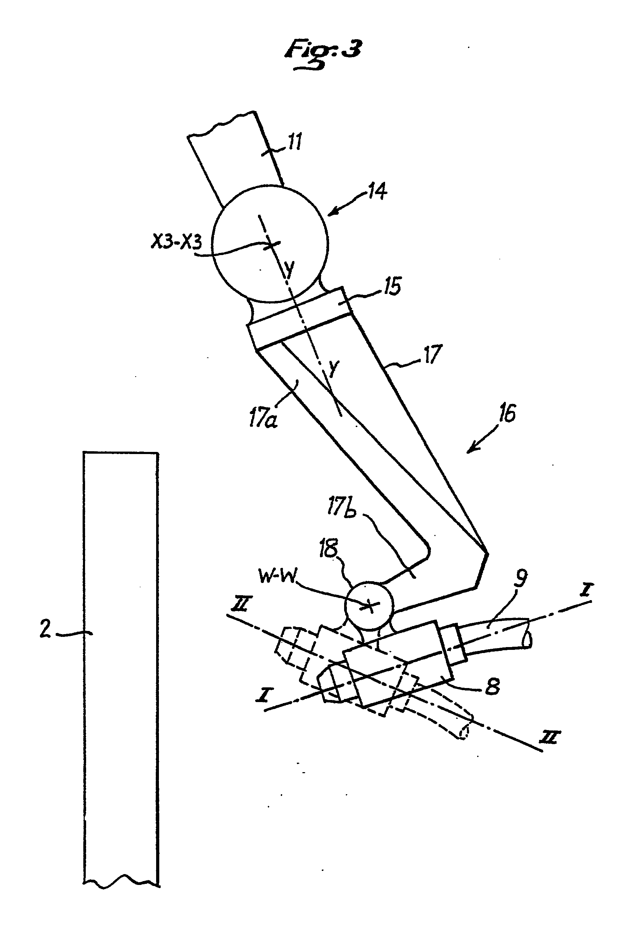

Le porte-buse selon l'invention, montré par la figure 3, porte la référence générale 16 et est raccordé au poignet 14, par l'intermédiaire du dispositif 15. Il comporte un bras 17, en forme approximative de L, dont l'extrémité de la grande branche 17a est reliée au dispositif 15, de façon que ledit bras 17 puisse tourner autour de deux axes orthogonaux X3-X3 et Y-Y du poignet 14, ladite branche 17a ayant la même direction générale que l'axe Y-Y tout en étant incliné sur celui-ci. L'extrémité libre de la petite branche 17b du bras 17 porte la buse 8, par l'intermédiaire d'une articulation 18, permettant à ladite buse 8 de prendre l'une ou l'autre de deux positions I-I ou II-II par pivotement autour d'un axe W-W, orthogonal à l'axe Y-Y. Cette petite branche 17b est par exemple orthogonale à l'axe Y-Y. La buse 8 est alimentée en projectiles de grenaillage par l'intermédiaire d'un conduit souple 9 le reliant au dispositif 7.

Grâce aux cinq degrés de liberté communiqués à la buse 8 par le robot 10, à la forme en L du bras 17 et à la possibilité de basculement de la buse 8 autour de l'axe W-W, il est possible d'atteindre tout point désiré d'une pièce à grenailler et de diriger le jet de projectiles sous l'incidence désirée, tout en n'ayant qu'un nombre de paramètres limités à contrôler, à savoir les rotations autour des cinq axes du robot et le basculement de la buse 8 en position I-I ou en position II-II.

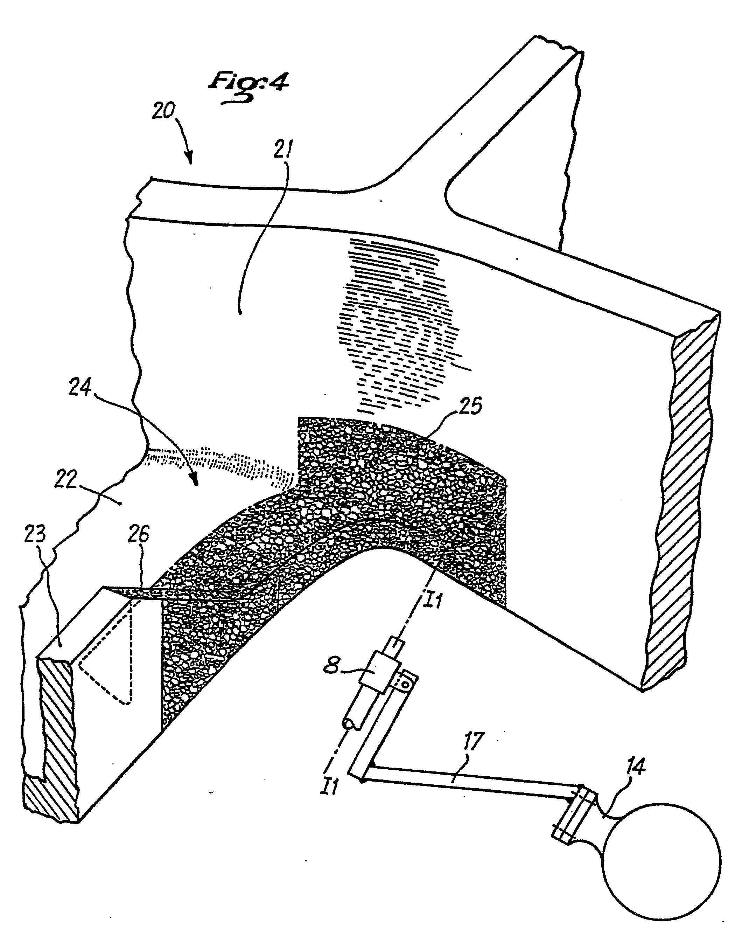

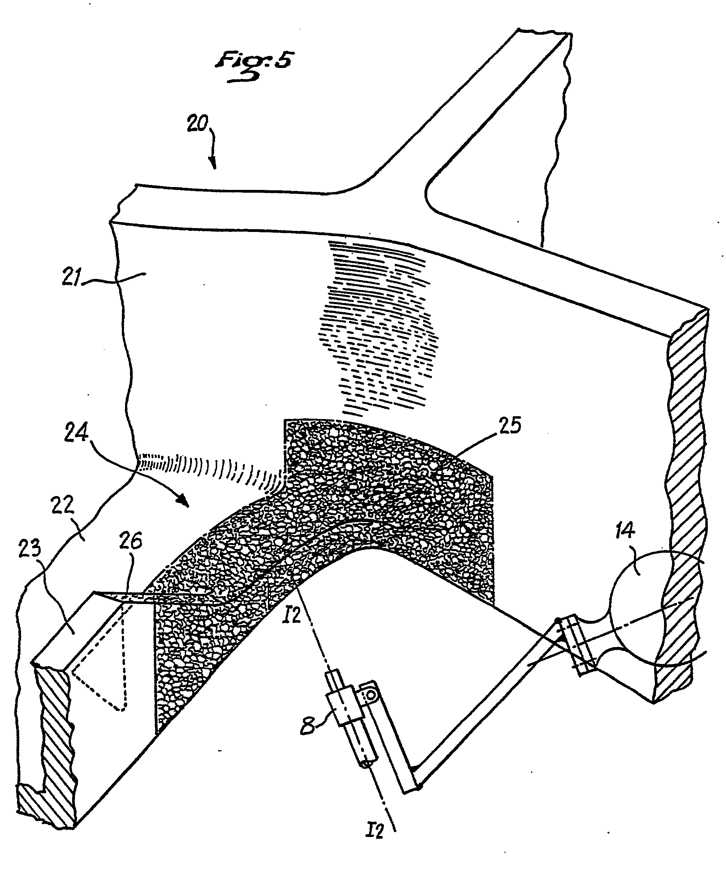

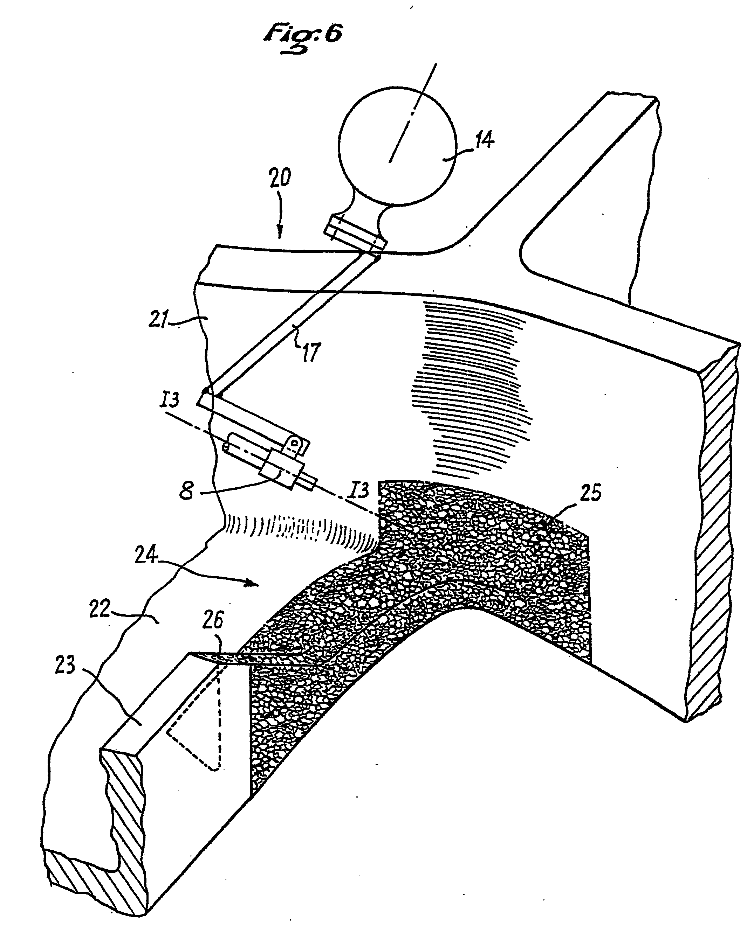

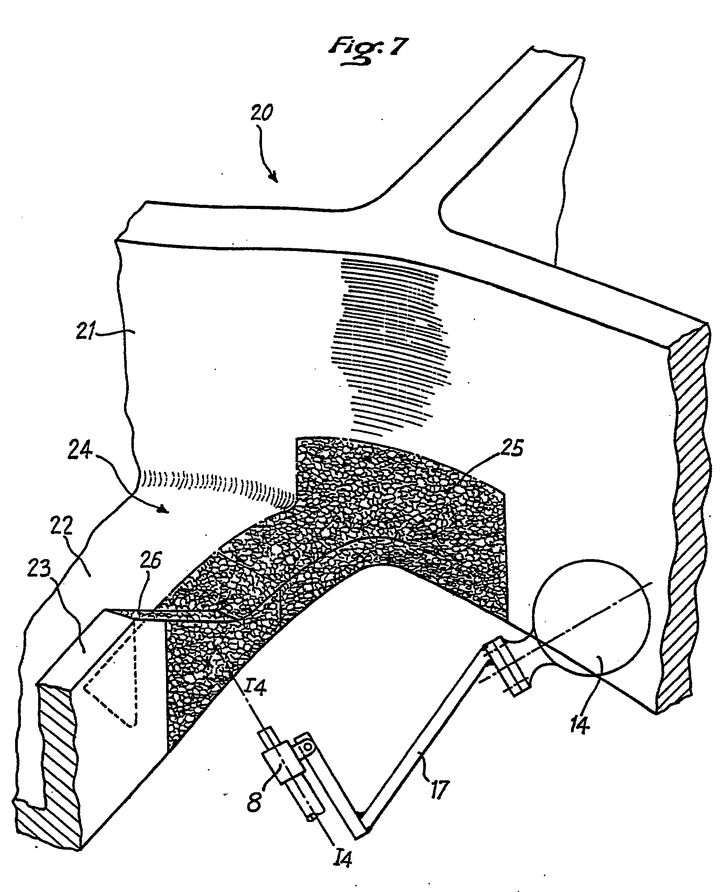

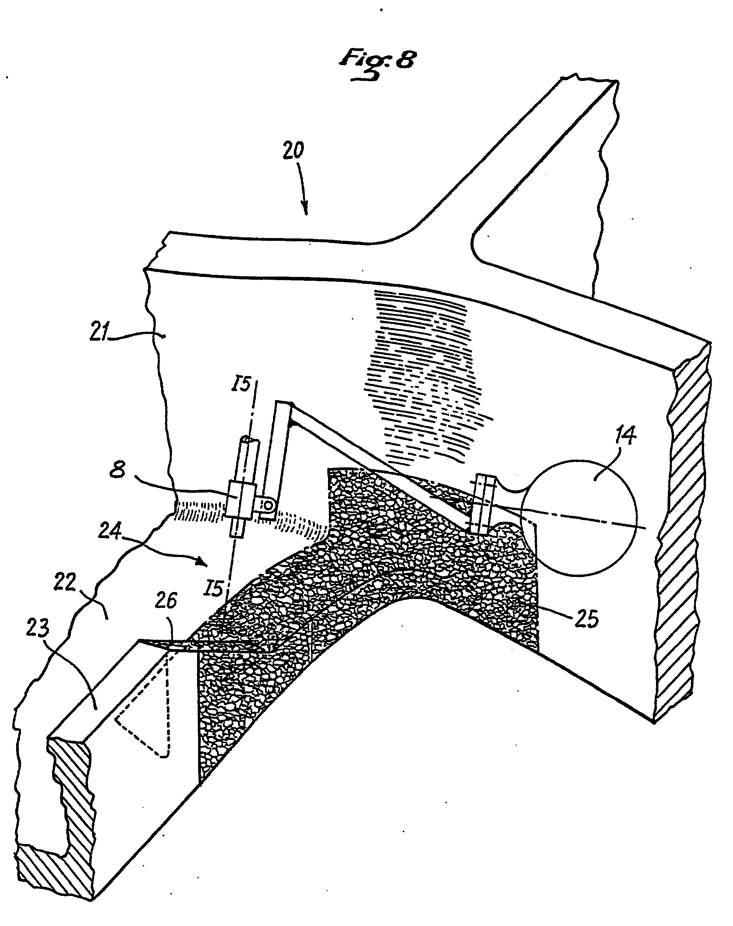

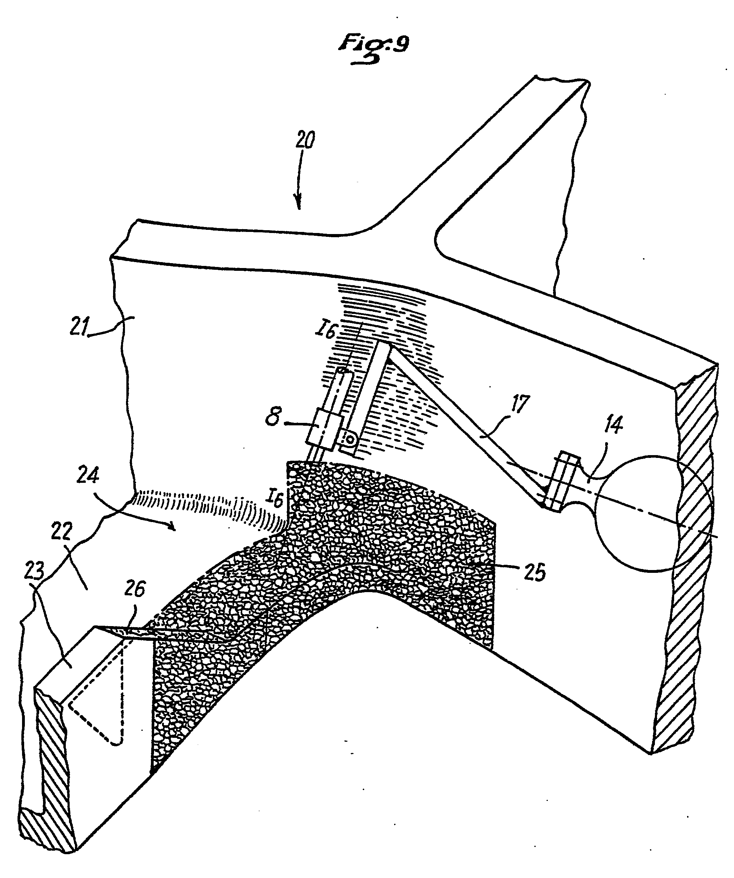

Pour illustrer ce qui précède, on a représenté schématiquement sur les figures 4 à 10 le grenaillage de précontraintes d'une partie de ferrure 20 de forme complexe, selon des zones strictement délimitées. A cet endroit, ladite ferrure 20 comporte deux parois orthogonales 21 et 22. La paroi 22 est pourvue d'un rebord 23, échancré en 24 au raccord des parois 21 et 22. Le grenaillage de précontraintes a pour objet de renforcer la ferrure 20 à l'emplacement de l'échancrure 24.

Sur les figures 4 à 10, on a représenté en grisé la zone 25 à grenailler, qui s'étend à la fois sur la paroi 21, sur la paroi 22, sur les faces avant et arrière du rebord 23 et sur le bord d'extrémité 26 dudit rebord 23.

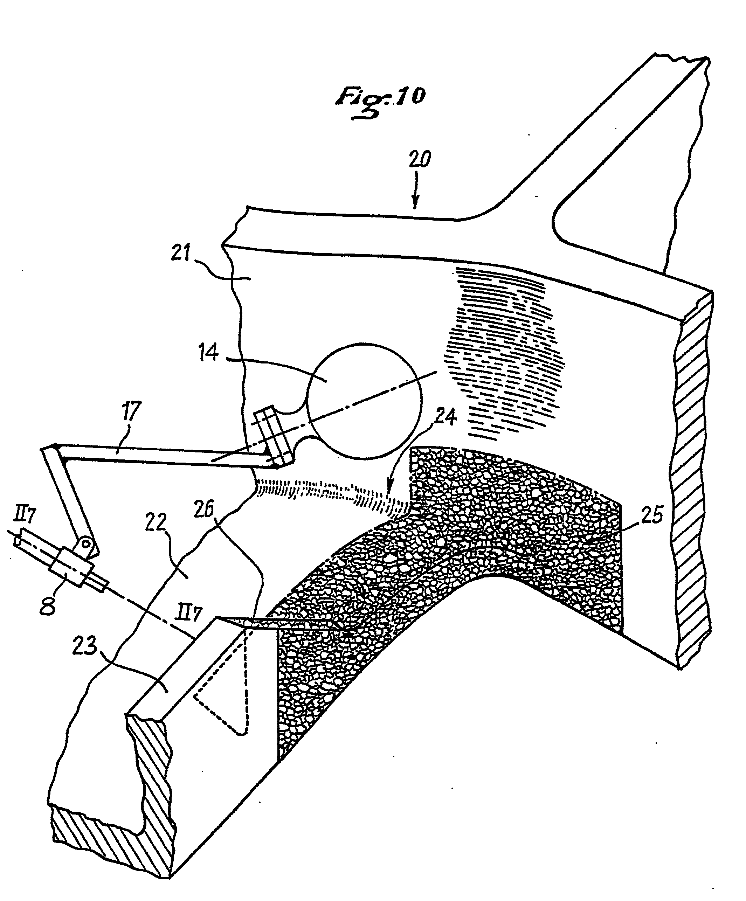

Les figures 4 à 9 montrent que toutes les parties de la zone 25 sont atteintes par le jet de projectiles de grenaillage en donnant à la buse 8, sept positions I1-I1 à I7-I7 différentes. La figure 10 montre que l'orientation de la buse 8 autour de l'axe W-W est nécessaire pour atteindre les plans arrière des pièces 20 à grenailler.

D'une manière générale, l'expérience a montré que, quelles que soient la forme de la zone à grenailler et l'incidence désirée pour le jet de projectiles de grenaillage, le système selon l'invention permettait, sans recourir à un sixième degré de liberté, de couvrir toutes les inclinaisons de jet admissibles dans les limites angulaires permises et ce, même sur les faces non directement accessibles des pièces à grenailler.

De façon habituelle, pour une pièce 2 ou 20 déterminée, le positionnement de la buse 8 est obtenu par apprentissage ou par modélisation.

De préférence, le grenaillage d'une zone se fait par balayage entrecroisé de ladite zone par ladite buse 8.

## Revendications

1 - Système automatique destiné à engendrer par grenaillage des précontraintes de compression superficielles sur une pièce (2,20) à traiter et comportant des moyens robotisés susceptibles de déplacer, par rapport à ladite pièce, au moins une buse (8) émettant un jet de projectiles de grenaillage, caractérisé en ce qu'il comporte un robot unique (10) du type communiquant à son poignet (14) cinq degrés de liberté, en ce que ladite buse (8) est reliée audit poignet (14) par l'intermédiaire d'un bras (17) monté sur ledit poignet (14) de façon à tourner autour de deux axes (X3-X3 et Y-Y) orthogonaux, dont le premier (Y-Y) a sensiblement la même direction générale que ledit bras (17), et en ce que ladite buse (8) est articulée à l'extrémité dudit bras (17) opposée au poignet (14) de façon à pouvoir occuper l'une ou l'autre de deux positions (I-I,II-II) par basculement autour d'un troisième axe (W-W) parallèle au second axe (X3-X3) dudit poignet (14).

2 - Système selon la revendication 1, caractérisé en ce que ledit bras (17) présente la forme au moins approximative d'un L, dont la première branche (17a) est reliée audit poignet (14) et dont la seconde branche (17b) porte ladite buse (8) à son extrémité libre.

3 - Système selon la revendication 2, caractérisé en ce que ladite seconde branche (17b) du bras (17) est orthogonale audit premier axe (Y-Y).

4 - Système selon la revendication 2, caractérisé en ce que ladite première branche (17a) est inclinée par rapport audit premier axe (Y-Y) dudit poignet (14), de façon à s'éloigner dudit premier axe (Y-Y) en direction de ladite seconde branche (17b).

5 - Système selon l'une quelconque des revendications 1 à 4, caractérisé en ce que les cinq degrés de liberté dudit robot (10) et le choix de l'une ou l'autre des deux positions de ladite buse (8) par rapport audit bras (17) sont commandés par un calculateur (30).

6 - Installation automatique destinée à engendrer par grenaillage des précontraintes de compression superficielles sur une pièce (2,20) à traiter et comportant une enceinte étanche (1) dans laquelle est disposée ladite pièce, caractérisée en ce qu'elle comporte un système automatique tel que spécifié sous l'une quelconque des revendications 1 à 5 et disposé au moins partiellement dans ladite enceinte (1).

## Patentansprüche

1. Automatisches Kugelstrahlsystem zum Erzeugen von Oberflächenvorspannungen bei einem Werkstück (2, 20), bestehend aus einer ferngesteuerten Einrichtung zum Bewegen mindestens einer, einen Kugelstrahl ausstoßenden Düse (8) relativ zum Werkstück, dadurch gekennzeichnet, daß es einen einzigen Roboter (10) aufweist, der so gestaltet ist, daß er an seiner Handhabe (14) fünf Freiheitsgrade aufweist, wobei die Düse (8) mit einer Handhabe (14) über einen Arm (17) verbunden ist, der an der Handhabe (14) so angelenkt ist, daß er um zwei zueinander senkrechten Achsen (X3—X3 und Y–Y) drehbar ist, wobei die erste Achse (Y–Y) etwa die gleiche allgemeine Richtung wie der Arm (17) hat und die Düse (8) an dem der Handhabe (14) abgewandten Ende dieses Armes (17) so gelagert ist, daß sie durch Umschwenken um eine dritte Achse (W–W), die parallel zur zweiten Achse (X3–X3) der Handhabe (14) verläuft, die eine oder andere Stellung (I–I bzw. II–II) einzunehmen vermag.

2. System nach Anspruch 1, dadurch gekennzeichnet, daß der Arm (17) mindestens in etwa die Form eine L hat, dessen erster Schenkel (17a) mit der Handhabe (14) verbunden ist und dessen anderer Schenkel (17b) an seinem freien Ende die Düse (8) trägt.

3. System nach Anspruch 2, dadurch gekennzeichnet, daß der andere Schenkel (17b) des Armes (17) rechtwinklig zur ersten Achse (Y–Y) ist.

4. System nach Anspruch 2, dadurch gekennzeichnet, daß der erste Schenkel (17a) gegenüber der ersten Achse (Y–Y) der Handhabe (14) so geneigt angeordnet ist, daß er sich in Richtung zum anderen Schenkel (17b) von der ersten Achse (Y–Y) entfernt.

5. System nach einem der Ansprüche 1 bis 4, dadurch gekennzeichnet, daß die fünf Freiheitsgrade des Roboters (10) und die Wahl der einen oder anderen der beiden Stellungen der Düse (8) in bezug auf den Arm (17) von einem Rechner (30) gesteuert sind.

6. Automatische Kugelstrahlvorrichtung zum Erzeugen von Oberflächenvorspannung auf einem Werkstück (2, 20) mit einem dichten Gehäuse (1), in dem das Werkstück angeordnet ist, dadurch gekennzeichnet, daß sie ein automatisches System nach einem der Ansprüche 1 bis 5 aufweist und dieses mindestens teilweise in dem Gehäuse (1) angeordnet ist.

**Claims**

1. Automatic shot-peening system for surface compressive prestressing on a piece (2, 20) to be treated and comprising robot means capable of displacing at least one nozzle (8) emitting a jet of shot-peening projectiles, with respect to said piece, characterized in that it comprises a single robot (10) of the type communicating to its wrist (14) five degrees of freedom in that said nozzle (8) is connected to said wrist (14) via an arm (17) mounted on said wrist (14) in order to rotate about two orthogonal axes (X3–X3 and Y–Y), the first one (Y–Y) having substantially the same general direction as said arm (17), and in that said nozzle (8) is articulated at the end of said arm (17) opposed to said wrist (14) in order to be able to take either of two positions (I–I, II–II) by swinging about a third axis (W–W) parallel to the second axis (X3–X3) of said wrist (14).

2. System according to claim 1, characterized in that said arm (17) is at least approximatily L-shaped, the first part (17a) of which is connected to the wrist (14) and the second part (17b) of which carries said nozzle (8) at its free end.

3. System according to claim 2, characterized in that said second part (17b) of arm (17) is orthogonal to said first axis (Y–Y).

4. System according to claim 2, characterized in that said first part (17a) is angled with respect to said first axis (Y–Y) of said wrist (14), in order to diverge from said first axis (Y–Y) towards said second part (17b).

5. System according to any one of claims 1 to 4, characterized in that the five degrees of freedom of said robot (10) and the choice of either position of the nozzle (8) with respect to said arm (17) are controlled by a computer (30).

6. Automatic installation intended to create surface compressive prestressing by shot-peening on a piece (2, 20) to be treated and comprising a tight enclosure (1) wherein said piece is disposed, characterized in that it comprises an automatic system according to any one of claims 1 to 5 and disposed at least partially in said enclosure (1).

*Fig.1*

*Fig. 2*

*Fig. 3*

*Fig.4*

Fig:5

*Fig:6*

*Fig. 7*

*Fig. 8*

*Fig.9*

Fig.10